# EUROPEAN PATENT SPECIFICATION

(11) **EP 4 537 649 B1**
(45) Date of publication and mention of the grant of the patent: **12.08.2026**
(21) Application number: 24186172.3
(22) Date of filing: 03.07.2024
(51) Int. Cl.: A01D 34/00, G05D 1/00, A01D 34/58, A01D 34/84, G05D 1/224, G05D 1/247, G05D 105/15, G05D 107/20, G05D 109/10, G05D 111/30, G05D 1/648

(54) **A ROBOTIC LAWN MOWER SYSTEM WITH ENHANCED BOUNDARY CUTTING**
ROBOTISCHES RASENMÄHERSYSTEM MIT VERBESSERTEM GRENZSCHNEIDEN
SYSTÈME DE TONDEUSE À GAZON ROBOTIQUE À COUPE DE LIMITE AMÉLIORÉE

(30) Priority: 09.10.2023 SE 2351159
(43) Date of publication of application: 16.04.2025
(73) Proprietor: Husqvarna AB, 561 82 Huskvarna (SE)
(72) Inventor: Hjelmåker, Olle, Huskvarna (SE)

(56) References cited:
- EP-A1- 3 767 420
- EP-A1- 3 850 936
- EP-A1- 4 075 229
- WO-A1-2022/250589
- US-A1- 2021 200 228

## Description

### TECHNICAL FIELD

The present disclosure relates to robotic lawn mower system that is adapted to operate within a certain operation area, circumvented by a border.

### BACKGROUND

Robotic lawn mowers are becoming increasingly more popular. In a typical deployment an operation area, such as a garden, the operation area is enclosed by a boundary wire with the purpose of keeping the robotic lawn mower inside the operation area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). In addition to this, the navigation system is adapted for navigation by means of a local base station that can be housed in a charging station and provide a navigation signal that further increases the navigation accuracy.

The robotic lawn mower is adapted to cut grass on a user's lawn automatically and can be charged automatically without intervention of the user, and does not need to be manually managed after being set once.

Edge or boundary cutting techniques are previous known, for example as shown in WO 2022250589 A1, but it is desirable to enhance these techniques, providing a more flexible robotic lawn mower system.

The document EP 3 850 936 A1 discloses a robotic mower that includes a boundary learning mode where a user can record a first point and a second point on a boundary line and a start point and an end point corresponding to a to-be-trimmed area. In a trimming mode, when the robotic mower moves along the boundary line in a first direction, the auxiliary cutting module is controlled to start working from the first point and to stop working when passing the second point. This means that the robotic mower performs edge trimming using the auxiliary cutting module while cutting along the boundary line.

### SUMMARY

The object of the present disclosure is to provide improved boundary cutting for a robotic lawn mower.

This object is obtained by means of a method for a robotic lawn mower system. The method comprises controlling the movement of a robotic lawn mower using a user terminal, acquiring boundary data that relate to a boundary defining an operation area within which the robotic lawn mower is adapted to operate, and presenting boundary data to a user via a user terminal display of the user terminal. The method further comprises defining, in response to a user's instruction via the user terminal, at least one boundary part, comprised in the boundary, and controlling the robotic lawn mower to perform boundary cutting along said boundary part, and to perform normal cutting along the rest of the boundary. The boundary cutting is a procedure used for enabling cutting over the boundary in a pre-defined manner.

This means that boundary cutting is performed only along a part, or parts, of the boundary in dependence of received data, enabling a user to define where boundary cutting is desired.

According to the invention, the method further comprises controlling the robotic lawn mower either to move along a first path in adjacent straight lines in the operation area, or to move in a stochastic path in the operation area, and controlling the robotic lawn mower to perform boundary cutting when encountering a boundary part.

This means that the robotic lawn mower can be controlled to cut the grass in different manners, and whenever a boundary part is encountered, boundary cutting is engaged.

According to some aspects, the boundary is an imaginary boundary, the boundary data comprising imaginary nodes along which the boundary runs. Defining at least one edge cut boundary part comprises selecting and/or adding nodes between which the robotic lawn mower is adapted to be controlled to perform boundary cutting. This means that the imaginary boundary is defined by nodes, where certain nodes can be chosen as start point and end point of each boundary part by the user inputting data via the user terminal display.

According to some aspects, the boundary is an imaginary boundary, where defining at least one boundary part comprises adding nodes between which the robotic lawn mower is adapted to be controlled to perform boundary cutting. This means that the imaginary boundary does not need to be defined by nodes or similar, but may for example be defined by means of a boundary layout where the nodes only are used for defining the boundary part.

According to some aspects, the boundary is constituted by a boundary wire, where the boundary data comprises a layout over the boundary wire. Defining at least one boundary part comprises adding imaginary nodes along the layout of the boundary wire, between which added nodes the robotic lawn mower is adapted to be controlled to perform boundary cutting.

This means that the present disclosure is applicable to the case where the boundary is constituted by a boundary wire as well. The boundary wire is suitably presented to the user in the form of a layout on the user terminal display.

According to some aspects, the method further comprises providing instructions to the user terminal. The instructions enable a user to control the robotic lawn mower via the user terminal, to be presented with said boundary data, and to define the at least one boundary part. These instructions can be in the form of a computer program, for example in the form of App.

According to some aspects, the robotic lawn mower has at least two drive wheels that form a pair of drive wheels arranged along a drive wheel axis with a center, the center being positioned between the drive wheels in the pair. The robotic lawn mower further has at least one swivelable wheel, at least a first rotatable grass cutting disc having a rotation axis, a first end portion facing a forward travelling direction, and a second end portion facing a reverse travelling direction. The boundary cutting is a pivoting boundary cutting, where controlling the robotic lawn mower to perform boundary cutting comprises controlling the robotic lawn mower to move towards a boundary part such that a first end portion approaches the boundary part, and determining if a distance to the boundary part fulfills a condition. When that is the case, the method comprises stopping the robotic lawn mower, and controlling the drive wheels to turn in mutually different directions such that the second end portion of the robotic lawn mower performs an arcuate movement along a cutting arc, enabling the first rotatable grass cutting disc to cut grass within the cutting arc.

In this way, it is possible to cut grass over a boundary, close to an edge such as lawn edge, in a controlled manner.

According to some aspects, when the robotic lawn mower encounters a boundary part the method comprises performing continuous boundary cutting along the boundary part such that a continuously cut grass edge is acquired along the boundary part. This means that whenever a whenever a boundary part is encountered, boundary cutting is engaged along all of that boundary part.

This object is also obtained by means of robotic lawn mowers and robotic lawn mower systems that are associated with above advantages.

In particular, it should be noted that the control unit, the user terminal and the remote server, when a remote server is used, can handle different part of the desired functionality. For example, at least partial data regarding the border and the operation area can be stored at either one of the user terminal and the remote server, or at both.

### BRIEF DESCRIPTION OF THE DRAWINGS

The present disclosure will now be described more in detail with reference to the appended drawings, where:
- Figure 1: shows a schematic top view of a robotic lawn mower;
- Figure 2: shows a schematic bottom view of the robotic lawn mower;
- Figure 3: schematically illustrates a robotic lawn mower system;
- Figure 4: schematically illustrates a robotic lawn mower performing boundary cutting;
- Figure 5: shows a schematic view of a control unit;
- Figure 6: shows a computer program product; and
- Figure 7: shows a flowchart for methods according to the present disclosure.

### DETAILED DESCRIPTION

Aspects of the present disclosure will now be described more fully hereinafter with reference to the accompanying drawings. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

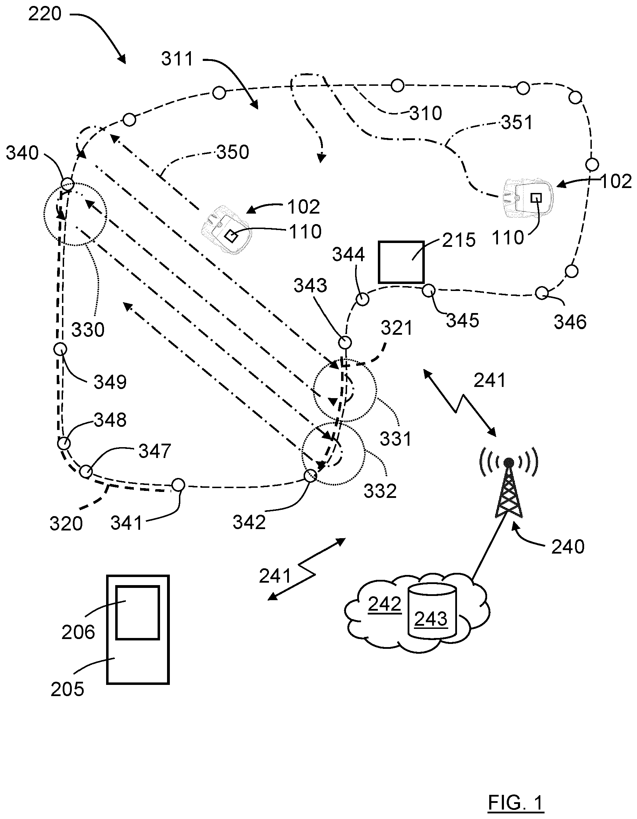

Figure 1 shows a robotic lawn mower system 220 a robotic lawn mower 100. The robotic lawn mower 100 is adapted to operate within an operation area 311 defined by a boundary 310 and comprises a mower control unit 110 adapted to control the operation of the robotic lawn mower 100.

According to the present disclosure, the mower control unit 110 is adapted to receive data defining at least one boundary part 320, 321, comprised in the boundary 310, where the mower control unit 110 is adapted to control the robotic lawn mower 100 to perform boundary cutting 330, 331, 332 (only schematically indicated) along said boundary part 320, 321, and to perform normal cutting along the rest of the boundary. The boundary cutting 330, 331, 332 is a procedure adapted to enable cutting over the boundary 310 in a pre-defined manner. This means that boundary cutting 330, 331, 332 is performed only along a part, or parts, of the boundary 310 in dependence of received data, enabling a user to define where boundary cutting is desired.

In the following, an example of a robotic lawn mower 100 will be provided, as well as examples and aspects of boundary cutting 330, 331, 332.

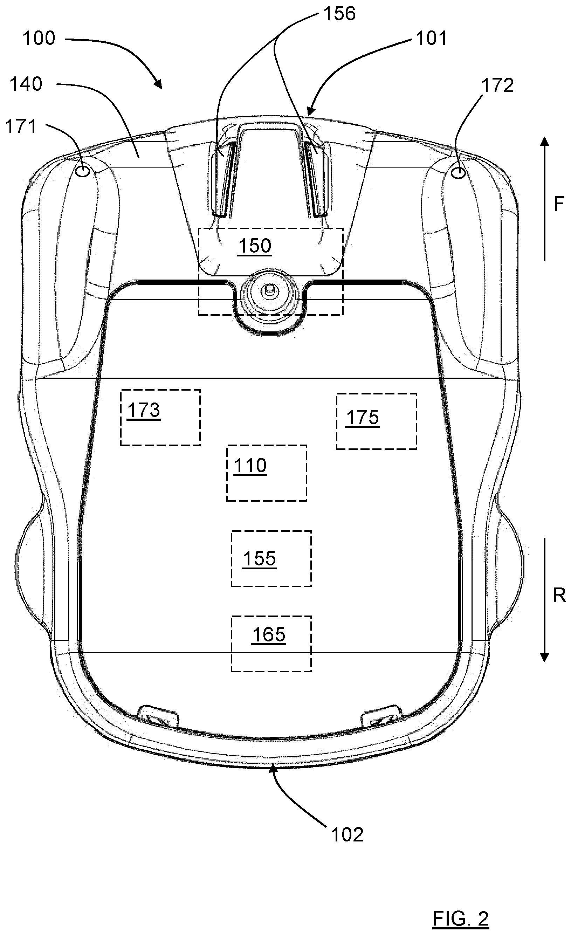

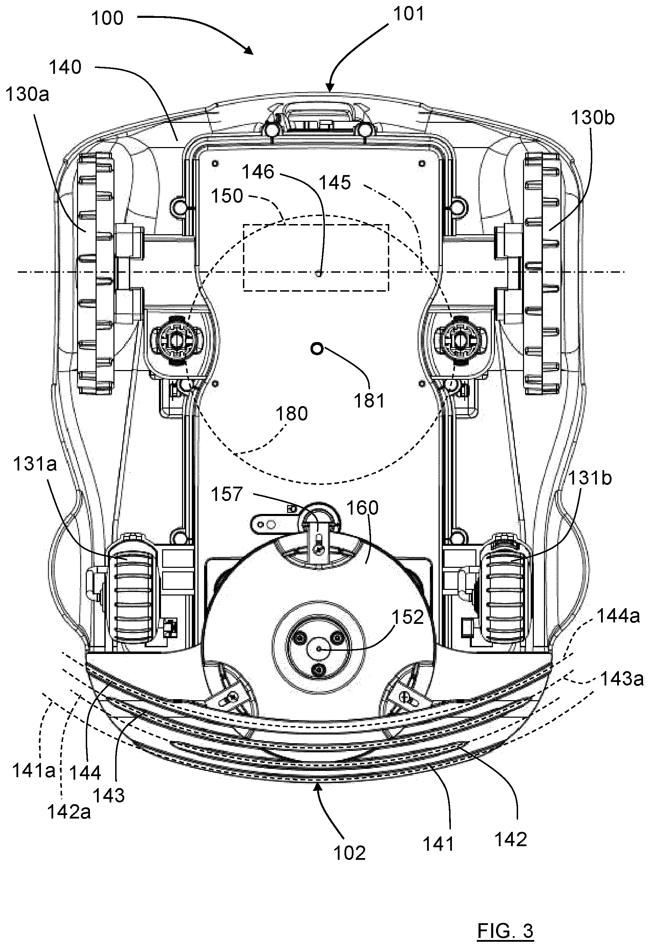

Figure 2 shows a top view of an example robotic lawn mower 100, and Figure 3 shows a bottom view of the example robotic lawn mower 100. According to some aspects, the robotic lawn mower 100 has a first end portion 101 and a second end portion 102, and is adapted for a forward travelling direction F and a reverse travelling direction R, where the first end portion 101 is facing the forward travelling direction F and the second end portion 102 is facing the reverse travelling direction R. The robotic lawn mower 100 comprises at least two drive wheels 130a, 130b, at least one swivelable wheel 131a, 131b, and a rotatable grass cutting disc 160 having a rotation axis 152.

The robotic lawn mower 100 may be a multi-chassis type or a mono-chassis type. A multi-chassis type comprises more than one body parts that are movable with respect to one another. A mono-chassis type comprises only one main body part. In this example embodiment, the robotic lawn mower 100 is of a mono-chassis type, having a main body part 140. The main body part 140 substantially houses all components of the robotic lawn mower 100.

According to some aspects, the robotic lawn mower 100 comprises at least one rechargeable electric power source such as a battery 155 (only schematically indicated in Figure 1) for providing power to the electric motor arrangements 150, 165. The battery 155 is arranged to be charged by means of received charging current from a charging station, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

According to some aspects, the robotic lawn mower 100 may further comprise at least one navigation sensor arrangement 175 and/or at least one wire sensor 173 (only schematically indicated in Figure 1). In one embodiment, the navigation sensor arrangement 175 comprises one or more sensors for deduced navigation. Examples of sensors for deduced reckoning are odometers, accelerometers, gyroscopes, and compasses to mention a few examples. The navigation sensor arrangement 175 may comprise a satellite navigation sensor such as a GPS (Global Positioning System) device or other Global Navigation Satellite System (GNSS) device, according to some aspects for example using Real Time Kinematic (RTK).

The wire sensor 173 is adapted to sense a boundary wire control signal and/or at least one environment detection device 170, 171 adapted to detect objects. In this example, radar transceivers 170, 171 are provided and adapted to transmit signals and to receive reflected signals that have been reflected by an object. Other environment detection devices such as camera devices, ultrasonic devices and Lidar devices are of curse also conceivable, as alternatives or in any suitable combination.

The mower control unit 110 is adapted to control the environment detection device 170, 171 and to control the speed and direction of the robotic lawn mower 100 in dependence of information acquired by means of the of the environment detection devices 170, 171 and/or said wire sensor 173 when the robotic lawn mower 100 is moving.

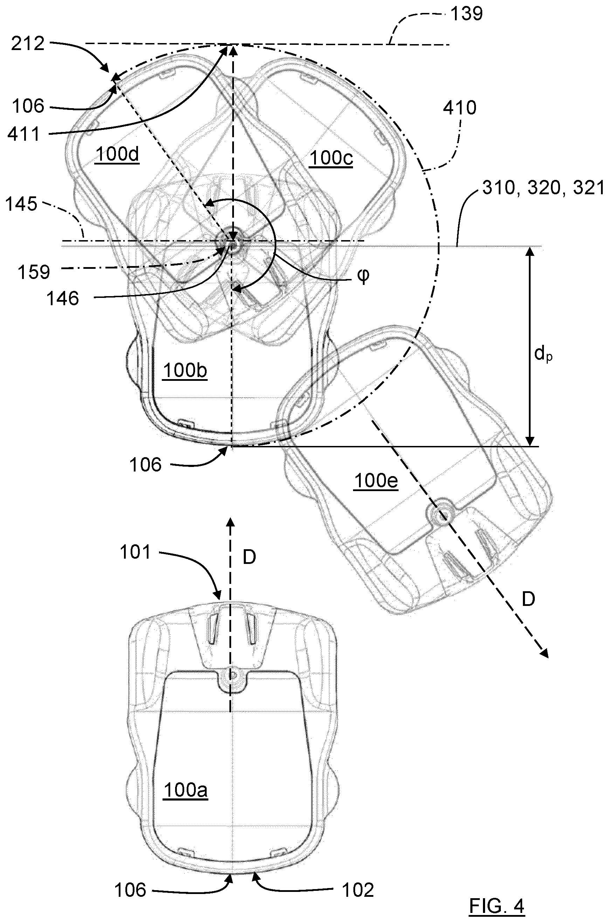

With reference also to Figure 4, during boundary cutting 330, 331, 332, the mower control unit 110 is adapted to control the robotic lawn mower 100a to
- move towards a boundary part 320, 321 such that the first end portion 101 approaches the boundary part 320, 321, and to
- determine if a distance to the boundary part 320, 321 fulfills a condition.

When the mower control unit 110 determines that a distance to the boundary part 320, 321, fulfills a condition, the mower control unit 110 is adapted to stop the robotic lawn mower 100b, and to control the drive wheels 130a, 130b to turn in mutually different directions such that the second end portion 102 of the robotic lawn mower 100c, 100d performs an arcuate movement along a cutting arc 410, enabling the first rotatable grass cutting disc 160 to cut grass within the cutting arc 410.

In this way, it is possible to cut grass over a boundary, close to an edge such as lawn edge 139, in a controlled manner.

According to some aspects, the mower control unit 110 is adapted to stop the robotic lawn mower 100b when the robotic lawn mower 100b is positioned on the boundary 310, where the condition relates to a determined distance between the boundary 310 and the robotic lawn mower 100 falling below a threshold. This means that the determined distance between the boundary 310 and some predetermined reference point of the robotic lawn mower 100 falls below the threshold, for example the wire sensor 173 in case of the boundary 310 being constituted by a boundary wire. Another example is a predetermined distance dₚ between the boundary 310 and a rearmost point 106 of the robotic lawn mower 100 as indicated in Figure 4, where the boundary can be either imaginary or in the form of a boundary wire. These are of course only examples; many other possibilities are conceivable. The boundary is here constituted by a boundary part 320, 321 according to the above.

According to some aspects, the drive wheels 130a, 130b have a drive wheel axis 145 with a center 146 and are drivably connected to a first electric motor arrangement 150. According to some aspects, at least two drive wheels 130a, 130b form a pair of drive wheels having the drive wheel axis 145 with the center 146, the center being positioned between the drive wheels 130a, 130b in the pair.

The first electric motor arrangement 150 is adapted to drive the drive wheels 130a, 130b in the same rotation direction, or in different rotation directions, and at different rotational speeds. According to some aspects, the first electric motor arrangement 150 comprises two separate electrical motors, and according to some further aspects each such electric motor is mounted to a corresponding drive wheel 130a, 130b, for example in a corresponding drive wheel hub.

The cutting disc 160 is drivably connected to a second electric motor arrangement 165 that in this example is in the form of a cutter motor. According to some aspects, the cutting disc 160 comprises a plurality of cutting knives 157, in this example three cutting knives 157 are shown (only one indicated in Figure 2).

According to some aspects, the center 159 of the cutting arc 410 is positioned along the drive wheel axis 145. According to some further aspects, the center 159 of the cutting arc 410 is positioned in the center 146 of the drive wheel axis 145.

This means that the arcuate movement can easily be performed by turning the drive wheels in mutually different directions. This is the case when the drive wheels 130a, 130b are driven in different rotation directions and at the same rotation velocities by the propulsion motor arrangement 150. Of course, this should not be interpreted literally, since small deviations can occur due to motor inaccuracies, uneven ground, uneven ground contact and uneven ground friction. The velocities being the same and the center 159 of the cutting arc 210 being positioned in the center 146 of the drive wheel axis 145 should be interpreted according to what is intended and practically achievable, not to be mathematically exact.

According to some aspects, as shown in Figure 3, the robotic lawn mower 100 comprises a first arcuate protective wall 141 that at least partly runs along the second end portion 102, and at least one further arcuate protective wall 142, 143, 144, the protective walls 141, 142, 143, 144 extending from the body 140 towards the ground G during normal running, the protective walls 141, 142, 143, 144 being radially separated.

In this example, there are four protective walls 141, 142, 143, 144; the first protective wall 141, a second protective wall 142, a third protective walls 14, and a fourth protective wall 144.

The protective wall parts 141, 142, 143, 144 confer an injury protection for humans and animals that come close to the second end portion 102 during normal running, in particular during boundary cutting when the first rotatable grass cutting disc 160 is active. The first rotatable grass cutting disc 160 is at least active during boundary cutting and may be turned off otherwise to save energy in case there is a main cutting disc as will be discussed later.

According to some aspects, the protective walls 141, 142, 143, 144 at least mainly follow respective protective wall arcs 141a, 142a, 143a, 144a, where all protective wall arcs 141a, 142a, 143a, 144a have a common center 146. According to some aspects, the common center 146 is the center of the drive wheel axis 145. In this way, when the arcuate movement is performed, the grass will not be bent when moving between the protective walls 141, 142, 143, 144. According to some aspects, the radial separation of the protective walls 141, 142, 143, 144 relates to the common center.

In this way, when the arcuate movement is performed, the grass will not be bent when moving between the protective walls.

According to some aspects, the cutting arc 410 has an angular extension that exceeds 180°, where the mower control unit 110 is adapted to control the robotic lawn mower 100e to continue moving when a second end center 106, according to some aspects constituting a rearmost point of the robotic lawn mower, that has followed the extension of the cutting arc 410 has reached an end 212 of the cutting arc 410. This means that the robotic lawn mower 100e will continue moving at an angle to the original angle of approach, away from the boundary 310. This in turn enables the robotic lawn mower 100 to repeat the above procedure, performing arcuate movements, such that a continuous grass edge close to the boundary 310 is cut. This can be performed in combination with cutting the rest of the grass on the lawn. In this context, the second end center 106 is a central point at the second end 102 along its extension.

With reference to Figure 1, the present disclosure also relates to a robotic lawn mower system 220 comprising the robotic lawn mower 100 as described herein, and a user terminal 205 that is arranged for wireless communication. The user terminal 205 is adapted to receive boundary data that relate to the boundary 310 defining the operation area 311 within which the robotic lawn mower 100 is adapted to operate, and to present boundary data to a user via a user terminal display 206 of the user terminal 205. The user terminal 205 is further adapted to receive instructions from a user, the instructions defining at least one boundary part 320, 321 comprised in the boundary 310, and to send the instructions to the mower control unit 110 that is adapted to control the robotic lawn mower 100 to perform boundary cutting 330, 331, 332 along said boundary part 320, 321, and to perform normal cutting along the rest of the boundary 310.

This means that a user can instruct the robotic lawn mower to perform boundary cutting along one or more boundary parts 320, 321 via the user terminal 205. In this way, these boundary parts 320, 321 can be defined in an efficient and easily feasible manner. In this context, the user terminal 205 being adapted to receive and present boundary data, and to receive instructions, means that the user terminal 205 has been provided with corresponding instructions.

According to some aspects, the robotic lawn mower system 220 comprises a remote server 243 that is adapted for wireless communication with the robotic lawn mower 100 and the user terminal 205. The remote server 243 is adapted to receive the instructions and to send corresponding instructions to the mower control unit 110, enabling the mower control unit 110 to instruct the robotic lawn mower 100 to perform boundary cutting 330, 331, 332 along said boundary part 320, 321, and to perform normal cutting along the rest of the boundary 310.

This means that the user terminal, that can be a mobile phone, and the mower control unit 110 can be arranged to communicate 241 with a cellular communication system 240. This communication system may, e.g., be a third generation partnership program (3GPP) defined access network like the fourth generation (4G) or the fifth generation (5G) access networks. The access network may provide access to remote networks and other resources such as, e.g., the Internet 242.

It is also appreciated that some processing functions may be performed by resources in a remote network 242, such as the remote server 243. Thus, functions of the mower control unit 110 may be performed remotely on, e.g., the remote server 243.

According to some aspects, the boundary 310 is an imaginary boundary, the boundary data comprising imaginary nodes 340-349 along which the boundary 310 runs, where the user terminal 205 is adapted to receive information in the form of selected, moved and/or added nodes 340, 341; 342, 343 between which the robotic lawn mower 100 is adapted to be controlled to perform boundary cutting 330, 331, 332.

This means that the imaginary boundary 310 is defined by nodes 340-349, where certain nodes can be chosen as start point and end point of each boundary part 320, 321 by the user inputting data via the user terminal display 206.

According to some aspects, the boundary 310 is an imaginary boundary, where the user terminal 205 is adapted to receive information in the form of added nodes 340, 341; 342, 343 between which the robotic lawn mower 100 is adapted to be controlled to perform boundary cutting 330, 331, 332.

This means that the imaginary boundary 310 does not need to be defined by nodes or similar, but may for example be defined by means of a boundary layout.

According to some aspects, the boundary 310 is constituted by a boundary wire, where the boundary data comprises a layout over the boundary wire 310, where the user terminal 205 is adapted to receive information in the form of added imaginary nodes 340, 341; 342, 343 along the layout of the boundary wire 310 between which the robotic lawn mower 100 is adapted to be controlled to perform boundary cutting 330, 331, 332.

This means that the present disclosure is applicable to the case where the boundary 310 is constituted by a boundary wire 310 as well. The boundary wire is suitably presented to the user in the form of a layout on the user terminal display 206.

In the examples above, the user terminal 205 has been provided with further corresponding instructions, enabling the user terminal 205 to perform the tasks described.

According to some aspects, the user terminal 205 is a special remote control provided specifically for the robotic lawn mower system 220, or a mobile phone such as a smart phone with a touch-sensitive display 206 adapted for reception and presentation of data. In the case of the user terminal 205 being in the form of a smart phone, the smart phone is modified to function as a user terminal in the robotic lawn mower system 220 by means of said instructions, and the interaction with the robotic lawn mower 100 is performed via an application program, an App, comprising said instructions. The App is either downloaded into the user terminal 205 or run at the remote server 243, and the App can have been downloaded into the user terminal 205 from the remote server 243. The user terminal 205 may also be in the form of any type of computer device such as a laptop that is provided with software comprising said instructions.

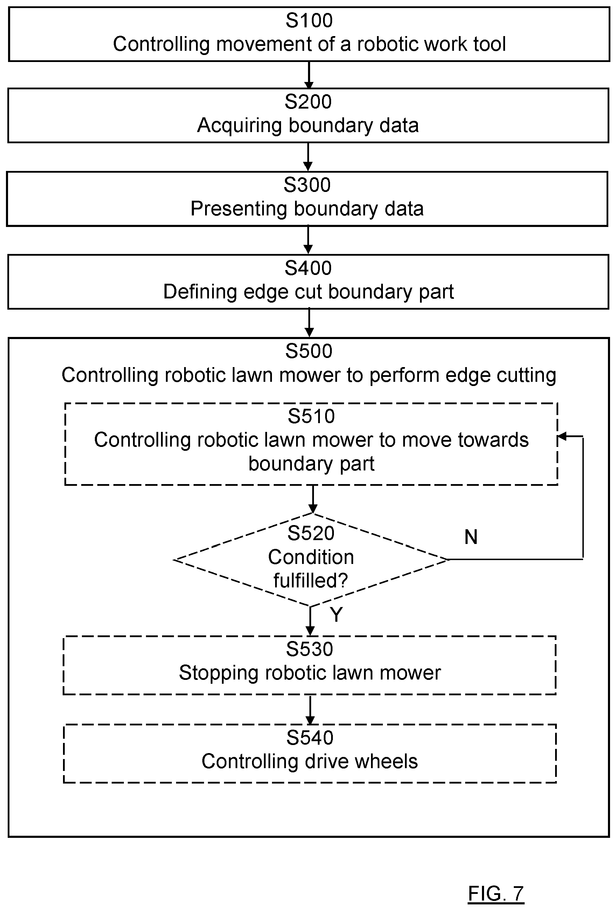

With reference to Figure 7 and Figure 1, the present disclosure also related to a method for a robotic lawn mower system 220. The method comprises controlling S100 the movement of a robotic lawn mower 100 using a user terminal 205, acquiring S200 boundary data that relate to a boundary 310 defining an operation area 311 within which the robotic lawn mower 100 is adapted to operate, and presenting S300 boundary data to a user via a user terminal display 206 of the user terminal 205. The method further comprises defining S400, in response to a user's instruction via the user terminal 205, at least one boundary part 320, 321, comprised in the boundary 310, and controlling S500 the robotic lawn mower 100 to perform boundary cutting 330, 331, 332 along said boundary part 320, 321, and to perform normal cutting along the rest of the boundary 310. The boundary cutting 330, 331, 332 is a procedure used for enabling cutting over the boundary 310 in a pre-defined manner. Examples and aspects of boundary cutting are discussed above.

According to some aspects, the boundary 310 is an imaginary boundary, the boundary data comprising imaginary nodes 340-349 along which the boundary 310 runs. Defining at least one edge cut boundary part 320, 321 comprises selecting and/or adding nodes 340, 341; 342, 343 between which the robotic lawn mower 100 is adapted to be controlled to perform boundary cutting 330, 331, 332.

This means that the imaginary boundary 310 is defined by nodes 340-349, where certain nodes can be chosen as start point and end point of each boundary part 320, 321 by the user inputting data via the user terminal display 206.

According to some aspects, the boundary 310 is an imaginary boundary, where defining at least one boundary part 320, 321 comprises adding nodes 340, 341; 342, 343 between which the robotic lawn mower 100 is adapted to be controlled to perform boundary cutting 330, 331, 332, where the nodes only are used for defining the boundary part.

This means that the imaginary boundary 310 does not need to be defined by nodes or similar, but may for example be defined by means of a boundary layout.

According to some aspects, the boundary 310 is constituted by a boundary wire, where the boundary data comprises a layout over the boundary wire 310. Defining at least one boundary part 320, 321 comprises adding imaginary nodes 340, 341; 342, 343 along the layout of the boundary wire 310, between which added nodes 340, 341; 342, 343 the robotic lawn mower 100 is adapted to be controlled to perform boundary cutting 330, 331, 332.

This means that the present disclosure is applicable to the case where the boundary 310 is constituted by a boundary wire 310 as well. The boundary wire is suitably presented to the user in the form of a layout on the user terminal display 206.

According to the invention, the method further comprises controlling the robotic lawn mower 100 either to move along a first path 350 in adjacent straight lines in the operation area, or to move in a stochastic path 351 in the operation area 311, and controlling the robotic lawn mower 102 to perform boundary cutting 330, 331, 332 when encountering a boundary part 320, 321.

This means that the robotic lawn mower 100 can be controlled to cut the grass in different manners, and whenever a boundary part 320, 321 is encountered, boundary cutting 330, 331, 332 is engaged.

According to the invention, the method further comprises providing instructions to the user terminal 205, which instructions enable a user to
- control S100 the robotic lawn mower 100 via the user terminal 205,
- be presented S300 with said boundary data, and to
- define S400 the at least one boundary part 320, 321.

These instructions can be in the form of a computer program, for example in the form of App.

According to some aspects, with reference also to Figure 2 and Figure 3, the robotic lawn mower 100 has at least two drive wheels 130a, 130b that form a pair of drive wheels arranged along a drive wheel axis 145 with a center 146, the center 146 being positioned between the drive wheels 130a, 130b in the pair, at least one swivelable wheel 131a, 131b, and at least a first rotatable grass cutting disc 160 having a rotation axis 152. The robotic lawn mower further has a first end portion 101 facing a forward travelling direction F, and a second end portion 102 facing a reverse travelling direction R.

The boundary cutting is a pivoting boundary cutting as illustrated in Figure 4, where controlling S500 the robotic lawn mower 100 to perform boundary cutting 330, 331, 332 comprises controlling S510 the robotic lawn mower 100a to move towards a boundary part 320, 321 such that a first end portion 101 approaches the boundary part 320, 321, and determining S520 if a distance to the boundary part 320, 321 fulfills a condition. When that is the case, the method comprises stopping S530 the robotic lawn mower 100b, and controlling S540 the drive wheels 130a, 130b to turn in mutually different directions such that the second end portion 102 of the robotic lawn mower 100c, 100d performs an arcuate movement along a cutting arc 410, enabling the first rotatable grass cutting disc 160 to cut grass within the cutting arc 410.

In this way, it is possible to cut grass over a boundary, close to an edge such as lawn edge 139, in a controlled manner. According to some aspects, the distance between the boundary part 320, 321 and the edge is adjustable, such that the boundary part 320, 321 is exceeded only to a desired or allowed extent.

According to some aspects, when the robotic lawn mower 100 encounters a boundary part 320, 321 the method comprises performing continuous boundary cutting 330, 331, 332 along the boundary part 320, 321 such that a continuously cut grass edge is acquired along the boundary part 320, 321. This means that whenever a whenever a boundary part 320, 321 is encountered, boundary cutting 330, 331, 332 is engaged along all of that boundary part 320, 321. As an alternative, boundary cutting is engaged only one time each time the robotic lawn mower 100 encounters a boundary part 320, 321.

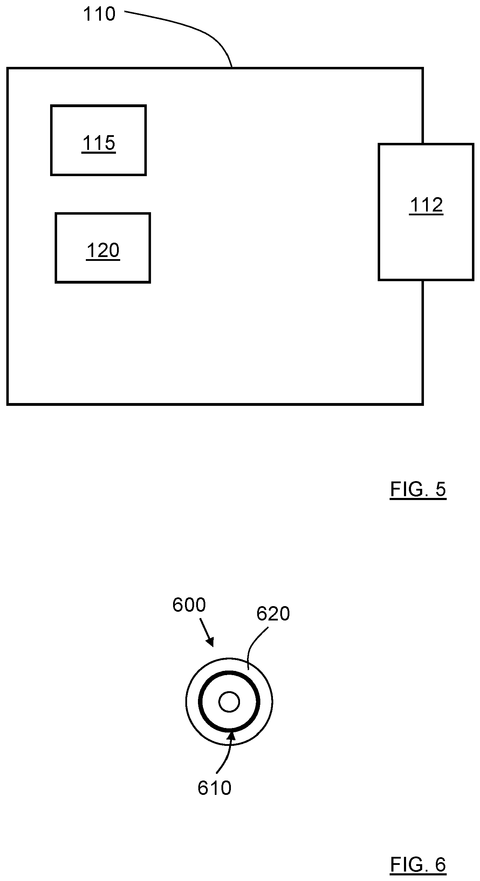

In Figure 5 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the radar transceivers 170, processing measurements results received via the radar transceivers 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 112 for communications with at least one external device such as a user terminal 205. As such the interface 112 may comprise one or more transmitters and receivers, comprising analogue and digital components and a suitable number of ports for wireline communication. The interface 112 can be adapted for communication with other devices, such as a remote server 243, a charging station 215, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

Figure 6 shows a computer program product 600 comprising computer executable instructions 610 stored on media 620 to execute any of the methods disclosed herein.

The present disclosure is not limited to the above, but may vary freely within the scope of the appended claims. For example, with reference to Figure 3, there is a second rotatable cutting disc 180 (only schematically indicated) having a rotational axle 181. This second cutting disc 180 can constitute a main cutting disc 180 that is operative during normal cutting, the first cutting disc 160 then possibly being disengaged. When the robotic lawn mower 100 is controlled to cut grass relatively close to a boundary, for example by performing the previously described boundary cutting, the main cutting disc 180 may be disengaged and the first cutting disc 160 is engaged into operation.

According to some aspects, the main cutting disc 180 has a larger diameter, and thus cutting width, than the first cutting disc 160. By only using the first cutting disc 160 when cutting grass relatively close to a boundary and using the main cutting disc 180 otherwise, energy may be saved and efficiency increased.

When a user selects nodes 341-349 using the user terminal 205, several nodes may be selected and then moved together as one object, preferably by using the user terminal display 206.

## Claims

1. A method for a robotic lawn mower system (220), where the method comprises:
controlling (S100) the movement of a robotic lawn mower (100) using a user terminal (205);
acquiring (S200) boundary data that relate to a boundary (310) defining an operation area (311) within which the robotic lawn mower (100) is adapted to operate;
presenting (S300) boundary data to a user via a user terminal display (206) of the user terminal (205);
defining (S400), in response to a user's instruction via the user terminal (205), at least one boundary part (320, 321), comprised in the boundary (310), controlling (S500) the robotic lawn mower (100) to perform boundary cutting (330, 331, 332) along said boundary part (320, 321), and to perform normal cutting along the rest of the boundary (310), where the boundary cutting (330, 331, 332) is a procedure adapted to enable cutting over the boundary (310) in a pre-defined manner,
the method further comprising
controlling the robotic lawn mower either to move along a first path (350) in adjacent straight lines in the operation area, or to move in a stochastic path (351) in the operation area (311), and
controlling the robotic lawn mower (102) to perform boundary cutting (330, 331, 332) when encountering a boundary part (320, 321).

2. The method according to claim 1, wherein the boundary (310) is an imaginary boundary, the boundary data comprising imaginary nodes (340-349) along which the boundary (310) runs, where defining at least one edge cut boundary part (320, 321) comprises selecting and/or adding nodes (340, 341; 342, 343) between which the robotic lawn mower (100) is adapted to be controlled to perform boundary cutting (330, 331, 332).

3. The method according to claim 1, wherein the boundary (310) is an imaginary boundary, where defining at least one boundary part (320, 321) comprises adding nodes (340, 341; 342, 343) between which the robotic lawn mower (100) is adapted to be controlled to perform boundary cutting (330, 331, 332).

4. The method according to claim 1, wherein the boundary (310) is constituted by a boundary wire, where the boundary data comprises a layout over the boundary wire (310), where defining at least one boundary part (320, 321) comprises adding imaginary nodes (340, 341; 342, 343) along the layout of the boundary wire (310), between which added nodes (340, 341; 342, 343) the robotic lawn mower (100) is adapted to be controlled to perform boundary cutting (330, 331, 332).

5. The method according to any one of the previous claims, further comprising providing instructions to the user terminal (205), which instructions enable a user to
- control (S100) the robotic lawn mower (100) via the user terminal (205),
- be presented (S300) with said boundary data, and to
- define (S400) the at least one boundary part (320, 321).

6. The method according to any one of the previous claims, wherein the robotic lawn mower (100) has
- at least two drive wheels (130a, 130b) that form a pair of drive wheels arranged along a drive wheel axis (145) with a center (146), the center (146) being positioned between the drive wheels (130a, 130b) in the pair,
- at least one swivelable wheel (131a, 131b),
- at least a first rotatable grass cutting disc (160) having a rotation axis (152),
- a first end portion (101) facing a forward travelling direction (F),
- and a second end portion (102) facing a reverse travelling direction (R), where the boundary cutting is a pivoting boundary cutting, where controlling (S500) the robotic lawn mower (100) to perform boundary cutting (330, 331, 332) comprises
controlling (S510) the robotic lawn mower (100a) to move towards a boundary part (320, 321) such that a first end portion (101) approaches the boundary part (320, 321),
determining (S520) if a distance to the boundary part (320, 321) fulfills a condition, and when that is the case, the method comprises
stopping (S530) the robotic lawn mower (100b), and
controlling (S540) the drive wheels (130a, 130b) to turn in mutually different directions such that the second end portion (102) of the robotic lawn mower (100c, 100d) performs an arcuate movement along a cutting arc (410), enabling the first rotatable grass cutting disc (160) to cut grass within the cutting arc (410).

7. The method according to any one of the previous claims, wherein, when the robotic lawn mower (100) encounters a boundary part (320, 321) the method comprises performing continuous boundary cutting (330, 331, 332) along the boundary part (320, 321) such that a continuously cut grass edge is acquired along the boundary part (320, 321).

8. A robotic lawn mower (100) that is adapted to operate within an operation area (311) defined by a boundary (310) and comprises a mower control unit (110) adapted to control the operation of the robotic lawn mower (100), wherein the mower control unit (110) is adapted to receive data defining at least one boundary part (320, 321), comprised in the boundary (310), where the mower control unit (110) is adapted to control the robotic lawn mower (100) to perform boundary cutting (330, 331, 332) along said boundary part (320, 321), and to perform normal cutting along the rest of the boundary, where the boundary cutting (330, 331, 332) is a procedure adapted to enable cutting over the boundary (310) in a pre-defined manner, **characterized in that** the
mower control unit (110) is adapted to control the robotic lawn mower 100 either to move along a first path 350 in adjacent straight lines in the operation area, or to move in a stochastic path 351 in the operation area 311, and to control the robotic lawn mower 102 to perform boundary cutting 330, 331, 332 when encountering a boundary part 320, 321.

9. The robotic lawn mower (100) according to claim 8, further comprising a body (140), at least two drive wheels (130a, 130b) that form a pair of drive wheels arranged along a drive wheel axis (145) with a center (146), the center (146) being positioned between the drive wheels (130a, 130b) in the pair, the robotic lawn mower (100) further comprising at least one swivelable wheel (131a, 131b), at least a first rotatable grass cutting disc (160) having a rotation axis (152), where a first end portion (101) is facing a forward travelling direction (F) and a second end portion (102) is facing a reverse travelling direction (R), where, during boundary cutting (330, 331, 332), the mower control unit (110) is adapted to
- control the robotic lawn mower (100a) to move towards a boundary part (320, 321) such that the first end portion (101) approaches the boundary part (320, 321), and to
- determine if a distance to the boundary part (320, 321) fulfills a condition,
where, when the mower control unit (110) determines that a distance to the boundary part (320, 321), fulfills a condition, the mower control unit (110) is adapted to stop the robotic lawn mower (100b), and to control the drive wheels (130a, 130b) to turn in mutually different directions such that the second end portion (102) of the robotic lawn mower (100c, 100d) performs an arcuate movement along a cutting arc (410), enabling the first rotatable grass cutting disc (160) to cut grass within the cutting arc (410).

10. A robotic lawn mower system (220) comprising the robotic lawn mower (100) according to any one of the claims 8 or 9 and a user terminal (205) that is arranged for wireless communication, where the user terminal (205) is adapted to
- receive boundary data that relate to the boundary (310) defining the operation area (311) within which the robotic lawn mower (100) is adapted to operate;
- present boundary data to a user via a user terminal display (206) of the user terminal (205);
- receive instructions from a user, the instructions defining at least one boundary part (320, 321) comprised in the boundary (310),
- send the instructions to the mower control unit (110) that is adapted to control the robotic lawn mower (100) to perform boundary cutting (330, 331, 332) along said boundary part (320, 321), and to perform normal cutting along the rest of the boundary (310).

11. The robotic lawn mower system (220) according to claim 10, wherein the robotic lawn mower system (220) comprises a remote server (243) that is adapted for wireless communication with the robotic lawn mower (100) and the user terminal (205), where the remote server (243) is adapted to receive the instructions and to send corresponding instructions to the mower control unit (110), enabling the mower control unit (110) to instruct the robotic lawn mower (100) to perform boundary cutting (330, 331, 332) along said boundary part (320, 321), and to perform normal cutting along the rest of the boundary (310).

12. The robotic lawn mower system (220) according to any one of the claims 10 or 11, wherein the boundary (310) is an imaginary boundary, the boundary data comprising imaginary nodes (340-349) along which the boundary (310) runs, where the user terminal (205) is adapted to receive information in the form of selected, moved and/or added nodes (340, 341; 342, 343) between which the robotic lawn mower (100) is adapted to be controlled to perform boundary cutting (330, 331, 332).

13. The robotic lawn mower system (220) according to any one of the claims 10 or 11, wherein the boundary (310) is an imaginary boundary, where the user terminal (205) is adapted to receive information in the form of added nodes (340, 341; 342, 343) between which the robotic lawn mower (100) is adapted to be controlled to perform boundary cutting (330, 331, 332).

14. The robotic lawn mower system (220) according to any one of the claims 10 or 11, wherein the boundary (310) is constituted by a boundary wire, where the boundary data comprises a layout over the boundary wire (310), where the user terminal (205) is adapted to receive information in the form of added imaginary nodes (340, 341; 342, 343) along the layout of the boundary wire (310) between which the robotic lawn mower (100) is adapted to be controlled to perform boundary cutting (330, 331, 332).

15. The robotic lawn mower system (220) according to any one of the claims 10-14, wherein the user terminal (205) is a special remote control provided specifically for the robotic lawn mower system (220), or a mobile phone such as a smart phone with a touch-sensitive display (206) adapted for reception and presentation of data.

16. The robotic lawn mower system (220) according to claim 15, wherein, in the case of the user terminal (205) being in the form of a smart phone, the smart phone (205) is modified to function as a user terminal in the robotic lawn mower system (220) by means of certain instructions, and the interaction with the robotic lawn mower (100) is performed via an application program, an App, comprising said instructions.

## Patentansprüche

1. Verfahren für ein Roboterrasenmähersystem (220), wobei das Verfahren umfasst:
Steuern (S100) der Bewegung eines Roboterrasenmähers (100) unter Verwendung eines Benutzerendgeräts (205);
Erfassen (S200) von Begrenzungsdaten, die sich auf eine Begrenzung (310) beziehen, die einen Arbeitsbereich (311) definiert, innerhalb dessen der Roboterrasenmäher (100) angepasst ist, um zu arbeiten;
Darstellen (S300) von Begrenzungsdaten für einen Benutzer über eine Benutzerendgeräteanzeige (206) des Benutzerendgeräts (205);
Definieren (S400), als Reaktion auf eine Anweisung des Benutzers über das Benutzerendgerät (205), mindestens eines Begrenzungsteils (320, 321), der in der Begrenzung (310) umfasst ist, Steuern (S500) des Roboterrasenmähers (100), um ein Begrenzungsschneiden (330, 331, 332) entlang des Begrenzungsteils (320, 321) durchzuführen und um ein normales Schneiden entlang der restlichen Begrenzung (310) durchzuführen, wobei das Begrenzungsschneiden (330, 331, 332) ein Vorgang ist, der angepasst ist, um ein Schneiden über die Begrenzung (310) in einer vordefinierten Weise zu ermöglichen, das Verfahren ferner umfassend
Steuern des Roboterrasenmähers, um sich entweder entlang eines ersten Pfads (350) in angrenzenden geraden Linien in dem Arbeitsbereich zu bewegen, oder um sich in einem stochastischen Pfad (351) in dem Arbeitsbereich (311) zu bewegen, und
Steuern des Roboterrasenmähers (102), um das Begrenzungsschneiden (330, 331, 332) durchzuführen, wenn er auf einen Begrenzungsteil (320, 321) trifft.

2. Verfahren nach Anspruch 1, wobei die Begrenzung (310) eine imaginäre Begrenzung ist, die Begrenzungsdaten umfassend imaginäre Knoten (340-349), entlang derer die Begrenzung (310) verläuft, wobei das Definieren mindestens eines Kantenschnittbegrenzungsteils (320, 321) ein Auswählen und/oder Hinzufügen von Knoten (340, 341; 342, 343) umfasst, zwischen denen der Roboterrasenmäher (100) angepasst ist, um gesteuert zu werden, um das Begrenzungsschneiden (330, 331, 332) durchzuführen.

3. Verfahren nach Anspruch 1, wobei die Begrenzung (310) eine imaginäre Begrenzung ist, wobei das Definieren mindestens eines Begrenzungsteils (320, 321) das Hinzufügen von Knoten (340, 341; 342, 343) umfasst, zwischen denen der Roboterrasenmäher (100) angepasst ist, um gesteuert zu werden, um das Begrenzungsschneiden (330, 331, 332) durchzuführen.

4. Verfahren nach Anspruch 1, wobei die Begrenzung (310) durch einen Begrenzungsdraht gebildet wird, wobei die Begrenzungsdaten ein Layout über den Begrenzungsdraht (310) umfassen, wobei das Definieren mindestens eines Begrenzungsteils (320, 321) das Hinzufügen imaginärer Knoten (340, 341; 342, 343) entlang des Layouts des Begrenzungsdrahts (310) umfasst, wobei der Roboterrasenmäher (100) zwischen den hinzugefügten Knoten (340, 341; 342, 343) angepasst ist, um gesteuert zu werden, um das Begrenzungsschneiden (330, 331, 332) durchzuführen.

5. Verfahren nach einem der vorstehenden Ansprüche, ferner umfassend ein Bereitstellen von Anweisungen an das Benutzerendgerät (205), wobei die Anweisungen einem Benutzer ermöglichen,
- den Roboterrasenmäher (100) über das Benutzerendgerät (205) zu steuern (S100),
- dass ihm die Begrenzungsdaten dargestellt werden (S300), und
- den mindestens einen Begrenzungsteils (320, 321) zu definieren (S400).

6. Verfahren nach einem der vorstehenden Ansprüche, wobei der Roboterrasenmäher (100) aufweist
- mindestens zwei Antriebsräder (130a, 130b), die ein Paar von Antriebsrädern ausbilden, die entlang einer Antriebsradachse (145) mit einem Mittelpunkt (146) eingerichtet sind, wobei der Mittelpunkt (146) zwischen den Antriebsrädern (130a, 130b) in dem Paar positioniert ist,
- mindestens ein drehbares Rad (131a, 131b),
- mindestens eine erste rotierbare Grasschneidscheibe (160), die eine Rotationsachse (152) aufweist,
- einen ersten Endabschnitt (101), der einer Vorwärtsfahrtrichtung (F) zugewandt ist,
- und einen zweiten Endabschnitt (102), der einer Rückwärtsfahrtrichtung (R) zugewandt ist,
wobei das Begrenzungsschneiden ein schwenkendes Begrenzungsschneiden ist, wobei das Steuern (S500) des Roboterrasenmähers (100), um das Begrenzungsschneiden (330, 331, 332) durchzuführen, umfasst
Steuern (S510) des Roboterrasenmähers (100a), um sich zu einem Begrenzungsteil (320, 321) hin zu bewegen, sodass sich ein erster Endabschnitt (101) dem Begrenzungsteil (320, 321) nähert,
Bestimmen (S520), ob ein Abstand zu dem Begrenzungsteil (320, 321) eine Bedingung erfüllt, und wenn dies der Fall ist, das Verfahren umfasst
Stoppen (S530) des Roboterrasenmähers (100b), und
Steuern (S540) der Antriebsräder (130a, 130b), um sie in voneinander verschiedene Richtungen einzuschlagen, sodass der zweite Endabschnitt (102) des Roboterrasenmähers (100c, 100d) eine bogenförmige Bewegung entlang eines Schneidbogens (410) durchführt, wobei der ersten rotierbaren Grasschneidscheibe (160) ermöglicht wird, Gras innerhalb des Schneidbogens (410) zu schneiden.

7. Verfahren nach einem der vorstehenden Ansprüche, wobei, wenn der Roboterrasenmäher (100) auf einen Begrenzungsteil (320, 321) trifft, das Verfahren ein Durchführen eines kontinuierlichen Begrenzungsschneidens (330, 331, 332) entlang des Begrenzungsteils (320, 321) umfasst, sodass eine kontinuierlich geschnittene Graskante entlang des Begrenzungsteils (320, 321) erlangt wird.

8. Roboterrasenmäher (100), der angepasst ist, um innerhalb eines Arbeitsbereichs (311), der durch eine Begrenzung (310) definiert ist, zu arbeiten, und eine Mähersteuereinheit (110) umfasst, die angepasst ist, um die Arbeit des Roboterrasenmähers (100) zu steuern, wobei die Mähersteuereinheit (110) angepasst ist, um Daten zu empfangen, die mindestens einen Begrenzungsteil (320, 321), der in der Begrenzung (310) umfasst ist, definieren, wobei die Mähersteuereinheit (110) angepasst ist, um den Roboterrasenmäher (100) zu steuern, um das Begrenzungsschneiden (330, 331, 332) entlang des Begrenzungsteils (320, 321) durchzuführen, und um das normale Schneiden entlang der restlichen Begrenzung durchzuführen, wobei das Begrenzungsschneiden (330, 331, 332) ein Vorgang ist, der angepasst ist, um das Schneiden über die Begrenzung (310) in einer vordefinierten Weise zu ermöglichen, **dadurch gekennzeichnet, dass** die Mähersteuereinheit (110) angepasst ist, um den Roboterrasenmäher 100 zu steuern, um sich entweder entlang eines ersten Pfads 350 in angrenzenden geraden Linien in dem Arbeitsbereich zu bewegen, oder um sich in einem stochastischen Pfad 351 in dem Arbeitsbereich 311 zu bewegen, und um den Roboterrasenmäher 102 zu steuern, um das Begrenzungsschneiden 330, 331, 332 durchzuführen, wenn er auf einen Begrenzungsteil 320, 321 trifft.

9. Roboterrasenmäher (100) nach Anspruch 8, ferner umfassend einen Körper (140), mindestens zwei Antriebsräder (130a, 130b), die ein Paar von Antriebsrädern, die entlang einer Antriebsradachse (145) mit einem Mittelpunkt (146) eingerichtet sind, ausbilden, wobei der Mittelpunkt (146) zwischen den Antriebsrädern (130a, 130b) in dem Paar positioniert ist, der Roboterrasenmäher (100) ferner umfassend mindestens ein drehbares Rad (131a, 131b), mindestens eine erste rotierbare Grasschneidscheibe (160), die eine Rotationsachse (152) aufweist, wobei ein erster Endabschnitt (101) einer Vorwärtsfahrtrichtung (F) zugewandt ist und ein zweiter Endabschnitt (102) einer Rückwärtsfahrtrichtung (R) zugewandt ist, wobei während des Begrenzungsschneidens (330, 331, 332) die Mähersteuereinheit (110) angepasst ist zum
- Steuern des Roboterrasenmähers (100a), um sich zu einem Begrenzungsteil (320, 321) hin zu bewegen, sodass sich der erste Endabschnitt (101) dem Begrenzungsteil (320, 321) nähert, und zum
- Bestimmen, ob ein Abstand zu dem Begrenzungsteil (320, 321) eine Bedingung erfüllt,
wobei, wenn die Mähersteuereinheit (110) bestimmt, dass ein Abstand zu dem Begrenzungsteil (320, 321) eine Bedingung erfüllt, die Mähersteuereinheit (110) angepasst ist, um den Roboterrasenmäher (100b) zu stoppen, und um die Antriebsräder (130a, 130b) zu steuern, um sie in voneinander verschiedene Richtungen einzuschlagen, sodass der zweite Endabschnitt (102) des Roboterrasenmähers (100c, 100d) eine bogenförmige Bewegung entlang eines Schneidbogens (410) durchführt, wobei der ersten rotierbaren Grasschneidscheibe (160) ermöglicht wird, Gras innerhalb des Schneidbogens (410) zu schneiden.

10. Roboterrasenmähersystem (220), umfassend den Roboterrasenmäher (100) nach einem der Ansprüche 8 oder 9 und ein Benutzerendgerät (205), das für eine drahtlose Kommunikation eingerichtet ist, wobei das Benutzerendgerät (205) angepasst ist zum
- Empfangen von Begrenzungsdaten, die sich auf die Begrenzung (310) beziehen, die den Arbeitsbereich (311) definiert, innerhalb dessen der Roboterrasenmäher (100) angepasst ist, um zu arbeiten;
- Darstellen von Begrenzungsdaten für einen Benutzer über eine Benutzerendgeräteanzeige (206) des Benutzerendgeräts (205);
- Empfangen von Anweisungen von einem Benutzer, wobei die Anweisungen mindestens einen Begrenzungsteil (320, 321), der in der Begrenzung (310) umfasst ist, definieren,
- Senden der Anweisungen an die Mähersteuereinheit (110), die angepasst ist, um den Roboterrasenmäher (100) zu steuern, um das Begrenzungsschneiden (330, 331, 332) entlang des Begrenzungsteils (320, 321) durchzuführen, und um das normale Schneiden entlang der restlichen Begrenzung (310) durchzuführen.

11. Roboterrasenmähersystem (220) nach Anspruch 10, wobei das Roboterrasenmähersystem (220) einen entfernten Server (243) umfasst, der für die drahtlose Kommunikation mit dem Roboterrasenmäher (100) und dem Benutzerendgerät (205) angepasst ist, wobei der entfernte Server (243) angepasst ist, um die Anweisungen zu empfangen und um entsprechende Anweisungen an die Mähersteuereinheit (110) zu senden, wobei der Mähersteuereinheit (110) ermöglicht wird, den Roboterrasenmäher (100) anzuweisen, das Begrenzungsschneiden (330, 331, 332) entlang des Begrenzungsteils (320, 321) durchzuführen und um das normale Schneiden entlang der restlichen Begrenzung (310) durchzuführen.

12. Roboterrasenmähersystem (220) nach einem der Ansprüche 10 oder 11, wobei die Begrenzung (310) eine imaginäre Begrenzung ist, die Begrenzungsdaten umfassend imaginäre Knoten (340-349), entlang derer die Begrenzung (310) verläuft, wobei das Benutzerendgerät (205) angepasst ist, um Informationen in der Form von ausgewählten, bewegten und/oder hinzugefügten Knoten (340, 341; 342, 343) zu empfangen, zwischen denen der Roboterrasenmäher (100) angepasst ist, um gesteuert zu werden, um das Begrenzungsschneiden (330, 331, 332) durchzuführen.

13. Roboterrasenmähersystem (220) nach einem der Ansprüche 10 oder 11, wobei die Begrenzung (310) eine imaginäre Begrenzung ist, wobei das Benutzerendgerät (205) angepasst ist, um Informationen in der Form von hinzugefügten Knoten (340, 341; 342, 343) zu empfangen, zwischen denen der Roboterrasenmäher (100) dazu angepasst ist, um gesteuert zu werden, um das Begrenzungsschneiden (330, 331, 332) durchzuführen.

14. Roboterrasenmähersystem (220) nach einem der Ansprüche 10 oder 11, wobei die Begrenzung (310) durch einen Begrenzungsdraht gebildet wird, wobei die Begrenzungsdaten ein Layout über den Begrenzungsdraht (310) umfassen, wobei das Benutzerendgerät (205) angepasst ist, um Informationen in der Form von hinzugefügten imaginären Knoten (340, 341; 342, 343) entlang des Layouts des Begrenzungsdrahts (310) zu empfangen, zwischen denen der Roboterrasenmäher (100) angepasst ist, um gesteuert zu werden, um das Begrenzungsschneiden (330, 331, 332) durchzuführen.

15. Roboterrasenmähersystem (220) nach einem der Ansprüche 10 bis 14, wobei das Benutzerendgerät (205) eine spezielle Fernbedienung, die speziell für das Roboterrasenmähersystem (220) bereitgestellt ist, oder ein Mobiltelefon wie ein Smartphone mit einem berührungsempfindlichen Display (206) ist, das für einen Empfang und eine Darstellung von Daten angepasst ist.

16. Roboterrasenmähersystem (220) nach Anspruch 15, wobei, in dem Fall, dass das Benutzerendgerät (205) in der Form eines Smartphones vorliegt, das Smartphone (205) modifiziert ist, um als ein Benutzerendgerät in dem Roboterrasenmähersystem (220) mittels gewisser Anweisungen zu funktionieren, und die Interaktion mit dem Roboterrasenmäher (100) über ein Anwendungsprogramm, eine App, umfassend die Anweisungen, durchgeführt wird.

## Revendications

1. Procédé pour un système de tondeuse à gazon robotique (220), où le procédé comprend :
la commande (S100) du déplacement d'une tondeuse à gazon robotique (100) à l'aide d'un terminal utilisateur (205) ;
l'acquisition (S200) de données de limite qui se rapportent à une limite (310) définissant une zone de fonctionnement (311) au sein de laquelle la tondeuse à gazon robotique (100) est adaptée pour fonctionner ;
la présentation (S300) de données de limite à un utilisateur par l'intermédiaire d'un écran de terminal utilisateur (206) du terminal utilisateur (205) ;
la définition (S400), en réponse à une instruction de l'utilisateur par l'intermédiaire du terminal utilisateur (205), d'au moins une partie de limite (320, 321), comprise dans la limite (310), la commande (S500) de la tondeuse à gazon robotique (100) pour réaliser une coupe de limite (330, 331, 332) le long de ladite partie de limite (320, 321), et pour réaliser une coupe normale le long du reste de la limite (310), lorsque la coupe de limite (330, 331, 332) est une procédure adaptée pour permettre la coupe au-delà de la limite (310) d'une manière prédéfinie, le procédé comprenant en outre
la commande de la tondeuse à gazon robotique soit pour se déplacer le long d'une première trajectoire (350) dans des lignes droites adjacentes dans la zone de fonctionnement, soit pour se déplacer dans une trajectoire stochastique (351) dans la zone de fonctionnement (311), et
la commande de la tondeuse à gazon robotique (102) pour réaliser une coupe de limite (330, 331, 332) lorsqu'elle rencontre une partie de limite (320, 321).

2. Procédé selon la revendication 1, dans lequel la limite (310) est une limite imaginaire, les données de limite comprenant des nœuds imaginaires (340-349) le long desquels la limite (310) s'étend, où la définition d'au moins une partie de limite de coupe de bord (320, 321) comprend la sélection et/ou l'ajout de nœuds (340, 341 ; 342, 343) entre lesquels la tondeuse à gazon robotique (100) est adaptée pour être commandée afin de réaliser une coupe de limite (330, 331, 332).

3. Procédé selon la revendication 1, dans lequel la limite (310) est une limite imaginaire, où la définition d'au moins une partie de limite (320, 321) comprend l'ajout de nœuds (340, 341 ; 342, 343) entre lesquels la tondeuse à gazon robotique (100) est adaptée pour être commandée afin de réaliser une coupe de limite (330, 331, 332).

4. Procédé selon la revendication 1, dans lequel la limite (310) est constituée d'un fil de limite, où les données de limite comprennent une disposition sur le fil de limite (310), où la définition d'au moins une partie de limite (320, 321) comprend l'ajout de nœuds imaginaires (340, 341 ; 342, 343) le long de la disposition du câble de limite (310), entre lesquels nœuds ajoutés (340, 341 ; 342, 343) la tondeuse à gazon robotique (100) est adaptée pour être commandée afin de réaliser une coupe de limite (330, 331, 332).

5. Procédé selon l'une quelconque des revendications précédentes, comprenant en outre la fourniture d'instructions au terminal utilisateur (205), lesquelles instructions permettent à un utilisateur de
- commander (S100) la tondeuse à gazon robotique (100) par l'intermédiaire du terminal utilisateur (205),
- se voir présenter (S300) lesdites données de limite, et de
- définir (S400) l'au moins une partie de limite (320, 321).

6. Procédé selon l'une quelconque des revendications précédentes, dans lequel la tondeuse à gazon robotique (100) a
- au moins deux roues motrices (130a, 130b) qui forment une paire de roues motrices agencées le long d'un axe de roue motrice (145) avec un centre (146), le centre (146) étant positionné entre les roues motrices (130a, 130b) dans la paire,
- au moins une roue pivotante (131a, 131b),
- au moins un premier disque rotatif de coupe d'herbe (160) ayant un axe de rotation (152),
- une première partie d'extrémité (101) orientée vers une direction de déplacement avant (F),
- et une seconde partie d'extrémité (102) orientée vers une direction de déplacement arrière (R),
où la coupe de limite est une coupe de limite pivotante, où la commande (S500) de la tondeuse à gazon robotique (100) afin de réaliser une coupe de limite (330, 331, 332) comprend
la commande (S510) de la tondeuse à gazon robotique (100a) afin qu'elle se déplace vers une partie de limite (320, 321) de telle sorte qu'une première partie d'extrémité (101) s'approche de la partie de limite (320, 321),
le fait de déterminer (S520) si une distance par rapport à la partie de limite (320, 321) remplit une condition, et lorsque tel est le cas, le procédé comprend
l'arrêt (S530) de la tondeuse à gazon robotique (100b), et
la commande (S540) des roues motrices (130a, 130b) pour qu'elles tournent dans des directions mutuellement différentes de telle sorte que la seconde partie d'extrémité (102) de la tondeuse à gazon robotique (100c, 100d) réalise un déplacement en arc de cercle le long d'un arc de coupe (410), permettant au premier disque rotatif de coupe d'herbe (160) de couper l'herbe au sein de l'arc de coupe (410).

7. Procédé selon l'une quelconque des revendications précédentes, dans lequel, lorsque la tondeuse à gazon robotique (100) rencontre une partie de limite (320, 321), le procédé comprend la réalisation d'une coupe de limite continue (330, 331, 332) le long de la partie de limite (320, 321) de telle sorte qu'un bord d'herbe coupée en continu est acquis le long de la partie de limite (320, 321).

8. Tondeuse à gazon robotique (100) qui est adaptée pour fonctionner au sein d'une zone de fonctionnement (311) définie par une limite (310) et comprend une unité de commande de tondeuse (110) adaptée pour commander le fonctionnement de la tondeuse à gazon robotique (100), dans laquelle l'unité de commande de tondeuse (110) est adaptée pour recevoir des données définissant au moins une partie de limite (320, 321), comprise dans la limite (310), où l'unité de commande de tondeuse (110) est adaptée pour commander la tondeuse à gazon robotique (100) pour réaliser une coupe de limite (330, 331, 332) le long de ladite partie de limite (320, 321), et pour réaliser une coupe normale le long du reste de la limite, où la coupe de limite (330, 331, 332) est une procédure adaptée pour permettre la coupe au-delà de la limite (310) d'une manière prédéfinie, **caractérisée en ce que** l'unité de commande de tondeuse (110) est adaptée pour commander la tondeuse à gazon robotique (100) soit pour se déplacer le long d'une première trajectoire (350) dans des lignes droites adjacentes dans la zone de fonctionnement, soit pour se déplacer dans une trajectoire stochastique (351) dans la zone de fonctionnement (311), et pour commander la tondeuse à gazon robotique (102) afin de réaliser une limite de coupe (330, 331, 332) lorsqu'elle rencontre une partie de limite (320, 321).

9. Tondeuse à gazon robotique (100) selon la revendication 8, comprenant en outre un corps (140), au moins deux roues motrices (130a, 130b) qui forment une paire de roues motrices agencées le long d'un axe de roue motrice (145) avec un centre (146), le centre (146) étant positionné entre les roues motrices (130a, 130b) dans la paire, la tondeuse à gazon robotique (100) comprenant en outre au moins une roue pivotante (131a, 131b), au moins un premier disque rotatif de coupe d'herbe (160) ayant un axe de rotation (152), où une première partie d'extrémité (101) est orientée vers une direction de déplacement avant (F) et une seconde partie d'extrémité (102) est orientée vers une direction de déplacement arrière (R), où, pendant la coupe de limite (330, 331, 332), l'unité de commande de tondeuse (110) est adaptée pour
- commander la tondeuse à gazon robotique (100a) pour se déplacer vers une partie de limite (320, 321) de telle sorte que la première partie d'extrémité (101) s'approche de la partie de limite (320, 321), et pour
- déterminer si une distance jusqu'à la partie de limite (320, 321) remplit une condition,
où, lorsque l'unité de commande de tondeuse (110) détermine qu'une distance par rapport à la partie de limite (320, 321) remplit une condition, l'unité de commande de tondeuse (110) est adaptée pour arrêter la tondeuse à gazon robotique (100b) et pour commander les roues motrices (130a, 130b) pour tourner dans des directions mutuellement différentes de telle sorte que la seconde partie d'extrémité (102) de la tondeuse à gazon robotique (100c, 100d) réalise un déplacement en arc de cercle le long d'un arc de coupe (410), permettant au premier disque rotatif de coupe d'herbe (160) de couper l'herbe au sein de l'arc de coupe (410).

10. Système de tondeuse à gazon robotique (220) comprenant la tondeuse à gazon robotique (100) selon l'une quelconque des revendications 8 ou 9 et un terminal utilisateur (205) qui est agencé pour une communication sans fil, où le terminal utilisateur (205) est adapté pour
- recevoir des données de limite se rapportant à la limite (310) définissant la zone de fonctionnement (311) au sein de laquelle la tondeuse à gazon robotique (100) est adaptée pour fonctionner ;
- présenter des données de limite à un utilisateur par l'intermédiaire d'un écran de terminal utilisateur (206) du terminal utilisateur (205) ;
- recevoir des instructions à partir d'un utilisateur, les instructions définissant au moins une partie de limite (320, 321) comprise dans la limite (310),
- envoyer les instructions à l'unité de commande de tondeuse (110) qui est adaptée pour commander la tondeuse à gazon robotique (100) afin de réaliser une coupe de limite (330, 331, 332) le long de ladite partie de limite (320, 321), et pour réaliser une coupe normale le long du reste de la limite (310).

11. Système de tondeuse à gazon robotique (220) selon la revendication 10, dans lequel le système de tondeuse à gazon robotique (220) comprend un serveur à distance (243) qui est adapté pour une communication sans fil avec la tondeuse à gazon robotique (100) et le terminal utilisateur (205), où le serveur à distance (243) est adapté pour recevoir les instructions et pour envoyer des instructions correspondantes à l'unité de commande de tondeuse (110), permettant à l'unité de commande de tondeuse (110) de donner instruction à la tondeuse à gazon robotique (100) de réaliser une coupe de limite (330, 331, 332) le long de ladite partie de limite (320, 321), et de réaliser une coupe normale le long du reste de la limite (310).

12. Système de tondeuse à gazon robotique (220) selon l'une quelconque des revendications 10 ou 11, dans lequel la limite (310) est une limite imaginaire, les données de limite comprenant des nœuds imaginaires (340-349) le long desquels la limite (310) s'étend, où le terminal utilisateur (205) est adapté pour recevoir des informations sous la forme de nœuds sélectionnés, déplacés et/ou ajoutés (340, 341 ; 342, 343) entre lesquels la tondeuse à gazon robotique (100) est adaptée pour être commandée afin de réaliser une coupe de limite (330, 331, 332).

13. Système de tondeuse à gazon robotique (220) selon l'une quelconque des revendications 10 ou 11, dans lequel la limite (310) est une limite imaginaire, où le terminal utilisateur (205) est adapté pour recevoir des informations sous la forme de nœuds ajoutés (340, 341 ; 342, 343) entre lesquels la tondeuse à gazon robotique (100) est adaptée pour être commandée afin de réaliser une coupe de limite (330, 331, 332).

14. Système robotique de tondeuse à gazon (220) selon l'une quelconque des revendications 10 ou 11, dans lequel la limite (310) est constituée d'un fil de limite, où les données de limite comprennent une disposition sur le fil de limite (310), où le terminal utilisateur (205) est adapté pour recevoir des informations sous la forme de nœuds imaginaires ajoutés (340, 341 ; 342, 343) le long de la disposition du fil de limite (310) entre lesquels la tondeuse à gazon robotique (100) est adaptée pour être commandée afin de réaliser une coupe de limite (330, 331, 332).

15. Système de tondeuse à gazon robotique (220) selon l'une quelconque des revendications 10 à 14, dans lequel le terminal utilisateur (205) est une télécommande spéciale fournie spécifiquement pour le système de tondeuse à gazon robotique (220), ou un téléphone mobile tel qu'un mobile multifonction avec un écran tactile (206) adapté à la réception et à la présentation de données.

16. Système de tondeuse à gazon robotique (220) selon la revendication 15, dans lequel, dans le cas où le terminal utilisateur (205) se présente sous la forme d'un mobile multifonction, le mobile multifonction (205) est modifié pour fonctionner en tant que terminal utilisateur dans le système de tondeuse à gazon robotique (220) au moyen de certaines instructions, et l'interaction avec la tondeuse à gazon robotique (100) est réalisée par l'intermédiaire d'un programme d'application, une application, comprenant lesdites instructions.
